# EUROPÄISCHE PATENTSCHRIFT

(11) **EP 0 980 500 B1**
(45) Veröffentlichungstag und Bekanntmachung des Hinweises auf die Patenterteilung: **26.09.2001**
(21) Anmeldenummer: 98912187.6
(22) Anmeldetag: 15.04.1998
(51) Int. Cl.: F24J 2/40

(54) **VORRICHTUNG ZUR TRANSPARENTEN WÄRMEDÄMMUNG AN EINEM GEBÄUDE**
TRANSPARENT HEAT INSULATION IN A BUILDING
DISPOSITIF POUR ISOLATION THERMIQUE TRANSPARENTE SUR UN IMMEUBLE

(30) Priorität: 09.05.1997 CH 109197
(43) Veröffentlichungstag der Anmeldung: 23.02.2000
(73) Patentinhaber: Schwarz, Dietrich, 7013 Domat/Ems (CH)
(72) Erfinder: Schwarz, Dietrich, 7013 Domat/Ems (CH)
(74) Vertreter: Münch, Otto, Dipl.-Ing.
(86) Internationale Anmeldenummer: CH9800141
(87) Internationale Veröffentlichungsnummer: WO9851973

(56) Entgegenhaltungen:
- EP-A- 0 346 320
- WO-A-95/22886
- DE-A- 2 506 332
- GB-A- 2 280 503
- US-A- 4 380 994
- US-A- 4 739 748

## Beschreibung

Die vorliegende Erfindung betrifft eine Vorrichtung zur transparenten Wärmedämmung an einem Gebäude. Eine solche Vorrichtung ist aus der EP-B-75 464 bekannt. Sie umfasst eine transparente Stegplatte, deren Zwischenräume durch eine Flüssigkeit durchströmt werden. Die Flüssigkeit absorbiert infrarotes Licht. Durch das einfallende Sonnenlicht wird sie erwärmt und kann zur Heizung des Gebäudes oder im Sommer zur Abschattung verwendet werden. Bei einer Ausführungsform ist auf der Aussenseite dieser Stegplatte noch eine Glasscheibe angeordnet.

Eine weitere, transparente, isolierende Stegplatte ist in der WO 95/22886 beschrieben.

Aus der EP-A-346 320 sind weitere transparente Wärmedämmungen bekannt. In einer Ausführungsform sind vier parallele, transparente Scheiben angeordnet. Im Winterbetrieb wird der Zwischenraum auf der Gebäudeaussenseite von Flüssigkeit durchströmt. Die Flüssigkeit wird auf einer Temperatur zugeführt, die unterhalb der Umgebungstemperatur ist. Durch die Umgebungsluft wird die Flüssigkeit über die äussere Scheibe etwas aufgewärmt. Im Kreislauf der zirkulierenden Wärmflüssigkeit ist eine Wärmepumpe angeordnet, welche die Flüssigkeit wieder auf die Eintrittstemperatur abkühlt. Mit der Wärmepumpe wird die gewonnene Wärmeenergie auf ein höheres Temperaturniveau angehoben. Im Sommer wird der innerste Zwischenraum mit der Flüssigkeit auf einer Temperatur beaufschlagt, die unterhalb der Innentemperatur des Gebäudes ist. Die Flüssigkeit zirkuliert also immer im Zwischenraum, der auf der kühleren Seite liegt. Die Wärmeübertragung auf die Flüssigkeit erfolgt durch Wärmeleitung und Konvektion. Diese Wärmedämmung hat allerdings einen relativ hohen Energiebedarf für die Wärmepumpe.

Aus der US-A-4 380 994 ist eine weitere Wärmedämmung bekannt. Sie hat drei Scheiben. Im Sommer ist der äussere Zwischenraum mit einer Flüssigkeit gefüllt. Die Flüssigkeit ist statisch und zirkuliert nicht. Im Winter wird dagegen der innere Zwischenraum mit der Flüssigkeit gefüllt.

Der vorliegenden Erfindung liegt die Aufgabe zugrunde, eine Vorrichtung zur Aussenisolation an einem Gebäude der eingangs genannten Art derart weiterzubilden, dass der Energiehaushalt im Gebäudeinnern besser kontrolliert und gleichzeitig die anfallende Sonnenenergie besser genutzt werden kann. Diese Aufgabe wird durch die Merkmalskombination dei Anspruchs 1 gelöst.

Nachfolgend werden Ausführungsbeispiele der Erfindung anhand der Zeichnungen beschrieben. Darin zeigt:
- Figuren 1 und 2: eine erste Ausführungsform,
- Figuren 3 bis 9: sieben weitere Ausführungsformen.

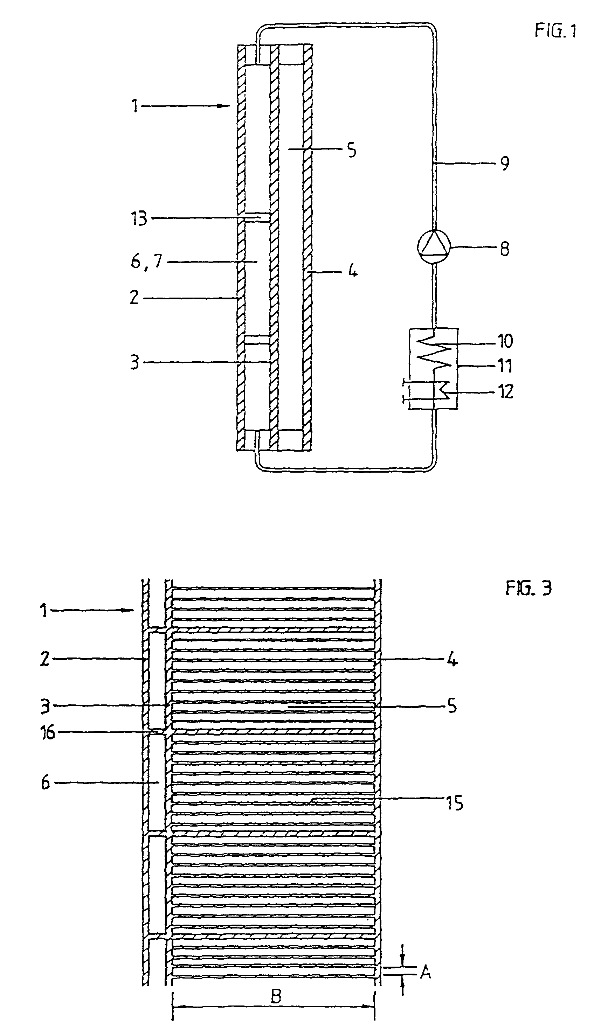

Figur 1 zeigt einen schematischen Querschnitt durch ein Fassadenelement 1. Es umfasst drei zueinander parallele, transparente Scheiben 2, 3, 4 z.B. aus Glas (Dreifachverglasung). Die Scheibe 4 ist dem Gebäudeinnern zugewandt. Der Zwischenraum 5 zwischen den Scheiben 3, 4 ist mit Luft oder einem anderen, besser isolierenden Gas gefüllt und dient der Wärmeisolation. Der Zwischenraum 6 zwischen der äusseren Scheibe 2 und der mittleren Scheibe 3 ist mit einer eingefärbten oder pigmentierten Flüssigkeit 7 gefüllt. Die Färbung oder die Pigmentation ist derart ausgelegt, dass die Flüssigkeit 7 das sichtbare Licht praktisch ungehindert durchlässt, jedoch das infrarote Licht möglichst vollständig absorbiert. Es ist aber auch möglich, durch eine stärkere Pigmentierung und Absorption eines Teils des sichtbaren Lichts eine entsprechende Abschattung des Gebäudeinnern zu erreichen.

Die Flüssigkeit 7 im Zwischenraum 6 zirkuliert mittels einer Pumpe 8 und einer an den Zwischenraum 6 an zwei gegenüberliegenden Seiten angeschlossenen Ringleitung 9. Die erwärmte Flüssigkeit 7 kann z.B. durch einen Wärmetauscher 10 eines Warmwasserspeichers 11 geleitet werden. Der Speicher 11 kann eine z.B. elektrische Zusatzheizung 12 haben. Alternativ kann mit der Leitung 9 z.B. auch eine Bodenheizung gespeist werden. Die Wärme der Flüssigkeit 7 kann auch durch eine Wärmepumpe auf ein höheres Temperaturniveau angehoben werden. Die Flüssigkeit 7 wird durch Variieren der Pigmentierung oder Färbung verschieden dunkel eingefärbt. Dies ermöglicht eine variable Lichtabsorption der Flüssigkeit 7. Der dahinter liegende Gebäudeinnenraum kann trotz sehr guter Durchsicht der Flüssigkeit variabel verschattet werden. Die absorbierte Energie in Form von Wärme kann wegen der transparenten Isolationsschicht nicht unkontrolliert ins Gebäudeinnern gelangen. Bei Bedarf lässt sich diese aber nutzen. Wenn die Wärmeenergie nicht genutzt wird, wird die Pumpe 8 abgeschaltet. Die Flüssigkeit dient dann nur zur Lichtabsorption oder zur Absorption von infraroter Strahlung.

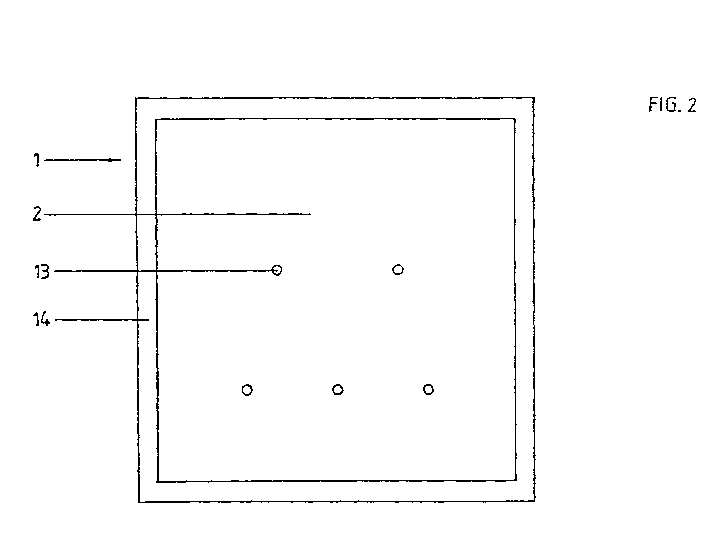

Der Wasserdruck nimmt mit steigender Fassadenelementhöhe zu. Bei Stegplatten führt dies zu keinen Problemen, da die Stege ihr die nötige Stabilität verleihen. Für Isolierverglasungen ist in diesem Zusammenhang die Festigkeit des Glases von grosser Bedeutung, mit Vorteil verwendet man ein gehärtetes Glas, insbesondere ein chemisch gehärtetes. Dies bedeutet, dass bei einem Fenster mit einer Abmessung von 1m x 1m eine Glasstärke von 6mm ausreicht, um den Wasserdruck ohne zusätzliche statische Hilfen aufzufangen. Bei geschosshohen Fenstern wären die nötigen Glasstärken ohne statische Hilfen zu gross. Dem kann man mit statischen Zugverbindungen 13 von Scheibe zu Scheibe entgegenwirken. Diese Zugverbindungen 13 können linear oder punktuell sein. Im unteren Teil des Fensters, wo die Wassersäule am höchsten ist, benötigt es mehr dieser Verbindungen 13 als im mittleren Teil. Im oberen Teil, auf Augenhöhe, kann auf Verbindungen 13 ganz verzichtet werden, was der Durchsicht dienlich ist. Die Figur 2 zeigt eine mögliche Verteilung dieser Zugverbindungen 13 in einem geschosshohen Fenster mit einem Fensterrahmen 14. Die Zugverbindungen 13 können aus Glas bestehen und mit den Scheiben 2, 3 verklebt sein.

Bei den nachfolgend beschriebenen Ausführungsbeispielen sind analoge Teile mit gleichen Bezugszeichen versehen, so dass sich eine detaillierte Beschreibung dieser Teile erübrigt.

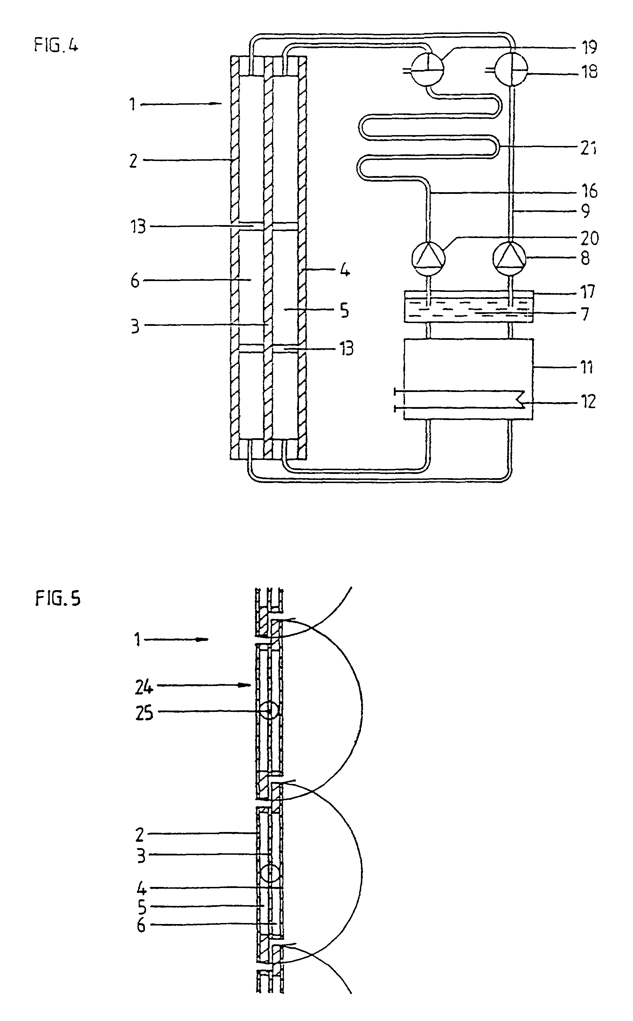

Figur 3 zeigt eine zweite Ausführungsform. Das Fassadenelement 1 ist hier als Stegplatte ausgebildet, die aus Kunststoff extrudiert sein kann. Der erste Zwischenraum 5 ist wesentlich breiter und durch eine Vielzahl von in Längsrichtung horizontalen Stegen 15 unterteilt. Die Breite B der Stege 15 ist wesentlich (mindestens vier mal) grösser als der Abstand A benachbarter Stege 15 voneinander. Wegen der verschiedenen Funktionen sind die Stege 15, 16 zwischen den Scheiben verschieden ausgeformt und angeordnet. In dem auf der Gebäudeaussenseite liegenden Scheibenzwischenraum 6 sind die Stege 16 schmal, dick und weit auseinander. So entsteht die nötige Stabilität der Stegplatte, wobei die Flüssigkeit 7 gut durch die Hohlräume 6 strömen kann. In dem auf der Gebäudeinnenseite liegenden Scheibenzwischenraum 5 sind die Stege 15 breit, dünn und nahe nebeneinander. So entsteht die nötige Isolationswirkung der Stegplatte, wobei die Konvektion in den Hohlräumen unterdrückt wird, wie dies in der WO 95/22886 beschrieben ist.

Der oben beschriebene Schichtaufbau ist für die Verschattung bereits eine ideale Lösung. Der Anwendungsbereich liegt bei grossflächigen, transparenten Fassaden, wie Bürobauten und Niederenergiehäuser. Wenn die Energienutzung hin zum Nullheizenergiehaus, neben der Verschattung verstärkt werden soll, so muss man den oben beschriebenen Aufbau ergänzen. Es gibt verschiedene Möglichkeiten dazu.

Eine Möglichkeit dazu zeigt Figur 4. Beide Zwischenräume 5, 6 sind an je eine Ringleitung 9, 16 angeschlossen. Ein kleiner Speicher 17 speichert die Flüssigkeit 7. Das Niveau der Flüssigkeit im Speicher 17 ist entgegen der Darstellung in Figur 4 unterhalb der Unterkante des Fassadenelementes 1. In den Ringleitungen 9, 16 sind Drei-Wege-Ventile 18, 19 angeordnet, welche wahlweise die Zirkulation der Flüssigkeit 7 durch eine der Leitungen 9, 16 oder die Belüftung des oberen Endes der Zwischenräume 5, 6 ermöglichen. Bei Bedarf der Verschattung oder der Verminderung der Einstrahlung von infrarotem Licht ist der äussere Zwischenraum 6 mit der pigmentierten Flüssigkeit 7 gefüllt und der innere 5 mit Luft. Die Pumpe 8 ist in Betrieb und die Ventile 18, 19 sind in der dargestellten Stellung. Beim Bedarf der Gebäudeheizung lässt man die Flüssigkeit von der äusseren Schicht in die innere Schicht einlaufen. Dazu werden die Ventile 18, 19 umgeschaltet, so dass die Flüssigkeit 7 aus dem Zwischenraum 6 ausläuft. Die Pumpe 8 wird abgestellt und die Pumpe 20 eingeschaltet. Dadurch wird das Licht im Zwischenraum 5 absorbiert und die innere Scheibe 4 auf die Temperatur der Flüssigkeit 7 erwärmt und heizt damit direkt das Gebäudeinnere. Zusätzlich kann mit der Ringleitung 16 z.B. eine Bodenheizung 21 gespeist werden.

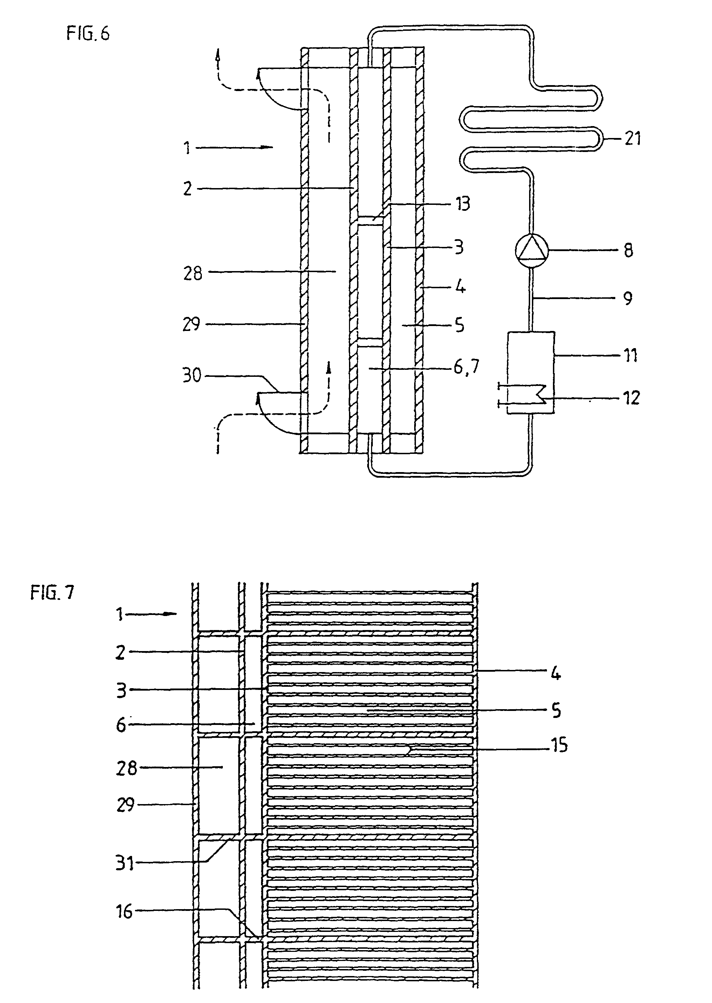

Figur 5 zeigt eine weitere Möglichkeit dieser Art. In diesem Fall ist das transparente oder transluzide Fassadenelement 1 in mehrere Segmente 24 unterteilt, die um horizontale oder vertikale Achsen 25 um 180° schwenkbar sind. So ist je nach Bedarf die mit absorbierender Flüssigkeit gefüllte Schicht für die Gebäudeverschattung aussen oder zur Gebäudeheizung innen.

Figur 6 zeigt eine weitere Möglichkeit: Es wird auf der Gebäudeaussenseite des mit Flüssigkeit 7 gefüllten Zwischenraums 6 eine weitere transparente Isolationsschicht mit einem Zwischenraum 28 und einer zusätzlichen Scheibe 29 vorgelagert. Es entstehen zwei transparente Isolationsschichten mit einer mit der Flüssigkeit 7 gefüllten Schicht 6 dazwischen. So wird der Energiegewinn in der Flüssigkeit 7 gesteigert, weil der Transmissionsverlust nach aussen reduziert wird. In Jahreszeiten, in denen nicht geheizt werden muss, oder in denen sogar gekühlt werden muss, muss die Transmission der Wärmeenergie in der Flüssigkeit nach aussen viel grösser sein als nach innen. Die auf der Gebäudeaussenseite liegende Isolationsschicht 28, 29 muss entweder einen veränderbaren k-Wert haben oder dieser muss viel grösser sein als jener der auf der Gebäudeinnenseite liegenden Isolationsschicht 5.

Für den Aufbau der Isolationsverglasung bedeutet das, dass die Dreifachverglasung zu einer Vierfachverglasung ergänzt wird. Es entstehen drei Scheibenzwischenräume 5, 6, 28. Der Mittlere 6 ist mit der zirkulierenden Flüssigkeit 7 gefüllt. Damit der k-Wert des auf der Gebäudeinnenseite angeordneten Scheibenzwischenraums 5 viel besser ist als der auf der Gebäudeaussenseite, muss der innere mit einem Edelgas, z.B. Xenon und der äussere lediglich mit Luft gefüllt werden.

Durch Lüftungsklappen 30, welche eine geregelte Zirkulation der Luft des äusseren Scheibenzwischenraums 28 mit der Aussenluft ermöglichen, lässt sich der k-Wert des äusseren Scheibenzwischenraums 28 verändern. Wenn die Flüssigkeit 7 erwärmt werden muss, bleiben die Lüftungsklappen 30 geschlossen. Die Luftzirkulation wird unterbunden und es entsteht ein guter k-Wert im äusseren Scheibenzwischenraum 28, welcher den Wirkungsgrad der Energiegewinnung durch Lichtabsorption in der Flüssigkeit 7 verbessert und zugleich den k-Wert des gesamten Scheibenaufbaus hervorragend verbessert. Wenn die Flüssigkeit 7 gekühlt werden muss, sind die Lüftungsklappen 30 geöffnet. Die durch den äusseren Scheibenzwischenraum 28 zirkulierende Aussenluft kühlt die im Zwischenraum 6 stehende Flüssigkeit 7 kontinuierlich ab. Die Pumpe 8 wird abgestellt.

Für den Aufbau von Stegplatten (Figur 7) bedeutet das, dass die Dreifachstegplatte zu einer Vierfachstegplatte ergänzt wird. Es entstehen drei Scheibenzwischenräume 5, 6, 28. Der innere Scheibenzwischenraum 5 mit breiten, dünnen Stegen 15 dient der Isolation. Der mittlere Scheibenzwischenraum 6 ist mit der zirkulierenden, pigmentierten oder gefärbten Flüssigkeit 7 gefüllt und dient der Licht- oder Infrarotabsorption. Der äussere Zwischenraum 28 dient der Isolation der Flüssigkeit 7 nach aussen. Die Stege 31 im Zwischenraum 28 sind isolationsmässig nicht optimiert, so dass der k-Wert des inneren Zwischenraums 5 viel besser ist als der k-Wert des äusseren 28. Lüftungsklappen 30 im äusseren Scheibenzwischenraum 28 ermöglichen eine Luftzirkulation in diesem und somit einen variablen k-Wert.

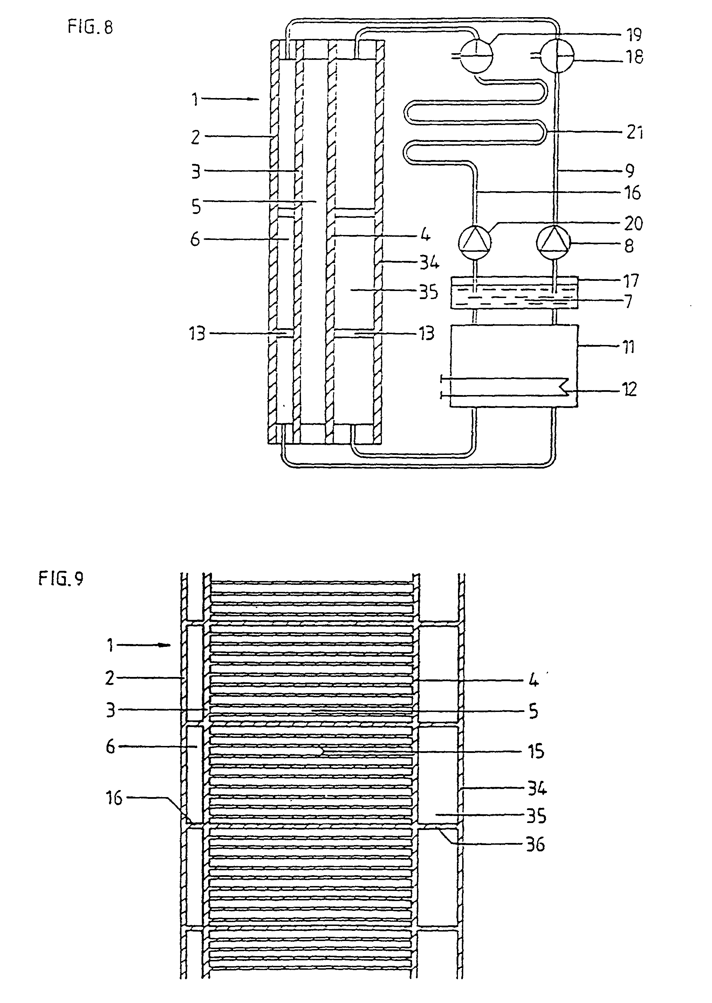

Eine weitere Möglichkeit ist in den Figuren 8 und 9 dargestellt. Es wird auf der Gebäudeinnenseite der transparenten Isolationsschicht 5 eine zweite, mit Flüssigkeit gefüllte Schicht mit einer vierten Scheibe 34 und einem Zwischenraum 35 vorgelagert. Es entstehen zwei mit Flüssigkeit gefüllte Schichten mit einer transparenten Isolationsschicht dazwischen. Die äussere mit Flüssigkeit gefüllte Schicht 6 dient durch Lichtabsorption in erster Linie der Verschattung des gesamten Schichtaufbaus und in zweiter Linie der Wärmeenergiegewinnung. Durch die dahinter liegende Isolationsschicht ist gewährleistet, dass der Wärmeübergang der absorbierten Energie in der Flüssigkeit in das Gebäudeinnere nicht unkontrolliert stattfindet. Die innere mit Flüssigkeit gefüllte Schicht dient der Wärmeenergiegewinnung durch Lichtabsorption. Der Wirkungsgrad ist sehr hoch, da die transparente Isolationsschicht ihr vorgelagert ist. Die Wärmeenergie wird durch Zirkulation der Flüssigkeit 7 der inneren Schicht an einen gewünschten Ort weitergeleitet. Die Pigmentierung oder Färbung der Flüssigkeit bestimmt deren Absorptionsgrad. Wenn im verschatteten Zustand des Schichtaufbaus trotzdem Wärmeenergiebedarf besteht, ermöglicht die Zirkulation der Flüssigkeit der äusseren Schicht an einen gewünschten Ort die Bedarfsdeckung. Wird in der inneren mit Flüssigkeit gefüllten Schicht 35 Licht absorbiert, so wird diese pigmentiert oder gefärbt und die äussere mit Flüssigkeit gefüllte Schicht nicht pigmentiert und ist klar. Wird in der äusseren Schicht Licht absorbiert, so ist die Pigmentierung oder Färbung genau umgekehrt. Durch exaktes Abstimmen der Pigmentierung der beiden mit Flüssigkeit gefüllten Schichten lassen sich die gewünschten Funktionen zwischen Wärmeenergiegewinnung und Verschattung genau steuern. Selbstverständlich kann über dieses System dem Gebäude bei Bedarf auch Energie zugeführt werden. Auf ein zusätzliches Heizungssystem kann verzichtet werden. Die momentane Sonnenenergieeinstrahlung sowie meteorologische Daten liefern die nötigen Parameter zur Systemsteuerung. Es können mehrere kleine Speicher 17 mit unterschiedlich pigmentierter Flüssigkeit vorhanden sein, welche über Ventile wahlweise den Leitungen 9, 16 zugeschaltet werden können, oder es können separate Pigmentiereinrichtungen in den Leitungen 9, 16 vorhanden sein.

Alternativ kann auch die Flüssigkeit 7 aus dem äusseren 6 oder inneren Zwischenraum 35 wie bei der Ausführungsform nach Figur 3 entleert werden.

Der innere Zwischenraum 35 dient wie erwähnt der Heizenergiegewinnung. Die Zirkulationsgeschwindigkeit ist relativ gross. Die Temperaturen liegen in ihm auf einem tiefen Temperaturniveau um 20°C. Der äussere Zwischenraum 6 dient der Verschattung. Die Flüssigkeit 7 zirkuliert relativ langsam oder überhaupt nicht. Der Zwischenraum 6 ist durch die isolierende Schicht 5 vom Gebäudeinnenraum abgekoppelt. In ihm kann schon bei durchschnittlichen Aussentemperaturen ein hohes Temperaturniveau um 60°C herrschen. Diese Temperaturen lassen sich ideal für das Brauchwarmwasser nutzen, was in der Übergangszeit und im Sommer der wesentliche Wärmeenergiebedarf ist. In dieser Zeit ist auch der Bedarf nach Verschattung hoch. Damit diese verschiedenen Temperaturniveaus besser erreicht werden, ist es ein Vorteil, wenn der äussere Zwischenraum 6 dünner ist als der innere. So muss weniger Masse aufgewärmt werden. Sie reagiert schneller auf Erwärmung. Zugleich erreicht man damit eine ideale Schalldämmung. Es ist mit der Flüssigkeit Masse vorhanden, welche durch die verschiedenen Dicken der inneren und äusseren Schicht Schallwellen schlecht übertragen. Bei diesem Systemaufbau kann auf eine weitere Speichermasse in der Fassade verzichtet werden. Das bedeutet, dass der Systemaufbau auch ohne die zusätzlichen, innen liegenden Speichermauern komplett ist. Der Einsatzbereich ist wesentlich grösser. Er findet auch in der Leichtbauweise, beim Hallenbau und für Sanierungen von massivem Mauerwerk mit schlechter Speicherkapazität wie Backstein oder Holz Anwendung.

Für den Aufbau der Isolationsverglasung (Figur 8) bedeutet das, dass in der Vierfachverglasung der äussere 6 und der innere Scheibenzwischenraum 35 mit Flüssigkeit 7 gefüllt sind und der mittlere mit einem gut isolierenden Edelgas gefüllt ist.

Für den Aufbau der Stegplatte (Figur 9) bedeutet das, dass im inneren und äusseren Scheibenzwischenraum 6, 35 schmale, dikke und weit auseinanderliegende Stege 16, 36 angeordnet sind, damit die Flüssigkeit dazwischen gut zirkulieren kann und die Stegplatte die nötige Stabilität erhält. Im mittleren Scheibenzwischenraum 5 sind breite, dünne Stege 15 mit geringem Stegabstand angeordnet, damit die benötigte Isolation entsteht. Ein weiterer Vorteil sind die relativ tiefen Temperaturen der Licht absorbierenden, zirkulierenden Flüssigkeiten. So wird das Stegplattenmaterial, vorwiegend Kunststoff, weniger belastet als bei dünnen, festen Absorbern, wo sehr hohe Temperaturen entstehen.

## Patentansprüche

1. Vorrichtung zur transparenten Wärmedämmung an einem Gebäude, umfassend ein Fassadenelement (1) mit vier parallelen, transparenten oder transluziden Scheiben (2, 3, 4, 34), die einen mittleren, ersten Zwischenraum (5), einen der Aussenseite des Gebäudes zugewandten zweiten Zwischenraum (6) und einen dem Gebäudeinnern zugewandten dritten Zwischenraum (35) begrenzen, wobei der erste Zwischenraum (5) mit Gas gefüllt ist und die beiden anderen Zwischenräume (6, 35) an mindestens einen Flüssigkeitskreislauf (9, 16) mit mindestens einer Umwälzpumpe (8, 20) derart angeschlossen sind, dass wahlweise mindestens einer dieser Zwischenräume (6, 35) von einer lichtabsorbierenden Flüssigkeit (7) durchströmt ist, sowie eine Steuereinrichtung, **dadurch gekennzeichnet, dass** die Steuereinrichtung derart ausgebildet und eingestellt ist, dass bei hoher Aussentemperatur und Sonneneinstrahlung die Flüssigkeit (7) zumindest im zweiten Zwischenraum (6) und bei tiefer Aussentemperatur im dritten Zwischenraum (35) zirkuliert.

2. Vorrichtung nach Anspruch 1, wobei der erste Zwischenraum (5) durch eine Vielzahl in Längsrichtung horizontaler Stege (15) unterteilt ist, deren Breite (B) mindestens viermal grösser ist als der Abstand (A) benachbarter Stege voneinander.

3. Vorrichtung nach Anspruch 1 oder 2, wobei der zweite Zwischenraum (6) schmaler ist als der dritte Zwischenraum (35).

4. Vorrichtung nach einem der Ansprüche 1 bis 3, wobei der an den dritten Zwischenraum (35) angeschlossene Kreislauf (16) über ein Gebäude-Heizelement (21) geführt ist:

5. Vorrichtung nach einem der Ansprüche 1 bis 4, wobei der an den zweiten Zwischenraum (6) angeschlossene Kreislauf (9) mit einem Warmwasserspeicher (11) verbunden ist.

6. Vorrichtung nach einem der Ansprüche 1 bis 5, wobei im Flüssigkeitskreislauf (9, 16) mehrere Speicher (17) mit unterschiedlich pigmentierter Flüssigkeit angeordnet sind, die über Ventile wahlweise den Kreislaufleitungen (9, 16) zuschaltbar sind.

7. Vorrichtung nach einem der Ansprüche 1 bis 5, wobei in den Kreisläufen (9, 16) zum zweiten und dritten Zwischenraum (6, 35) separate Pigmentiereinrichtungen eingeschaltet sind.

8. Vorrichtung nach einem der Ansprüche 1 bis 7, wobei die beiden äussersten Scheiben (2, 34) mit den ihnen benachbarten Scheiben (3, 4) durch Zugverbindungen (13, 16, 36) miteinander verbunden sind.

## Claims

1. A device for transparent heat insulation in a building, comprising a facade element (1) having four parallel, transparent or translucent plates (2, 3, 4, 34) that limit a center, first intermediate space (5), a second intermediate space (6) that faces the exterior of the building, and a third intermediate space (35) that faces the interior of the building, with the first intermediate space (5) being filled with gas and the two other intermediate spaces (6, 35) being connected to at least one liquid circuit (9, 16) with at least one circulation pump (8, 20) such that a light-absorbing liquid (7) selectively flows through at least one of these intermediate spaces (6, 35), the device further including a control device, **characterized in that** the control device is embodied and set up such that, with a high external temperature and solar radiation, the liquid (7) circulates at least in the second intermediate space (6) and, with a lower external temperature, in the third intermediate space (35).

2. The device according to claim 1, in which the first intermediate space (5) is divided by a plurality of webs (15) extending horizontally in the longitudinal direction, their width (B) being at least four times larger than the spacing (A) between adjacent webs.

3. The device according to claim 1 or 2, in which the second intermediate space (6) is narrower than the third intermediate space (35).

4. The device according to one of claims 1 through 3, in which the circuit (16) connected to the third intermediate space (35) is guided via a building heating element (21).

5. The device according to one of claims 1 through 4, in which the circuit (9) connected to the second intermediate space (6) is connected to a hot-water tank (11) .

6. The device according to one of claims 1 through 5, in which a plurality of tanks (17) holding differently-pigmented liquid is disposed in the liquid circuit (9, 16), the tanks being selectively connected to the circuit lines (9, 16) by way of valves.

7. The device according to one of claims 1 through 5, in which separate pigmentation devices in the circuits (9, 16) are switched to the second and third intermediate spaces (6, 35).

8. The device according to one of claims 1 through 7, in which tensile connections (13, 16, 36) connect the two outermost plates (2, 34) to the plates (3, 4) located adjacent to them.

## Revendications

1. Dispositif d'isolation thermique transparente dans un bâtiment, comprenant un élément de façade (1) comportant quatre plaques (2, 3, 4, 34) transparentes ou translucides, parallèles, qui délimitent un premier espace intercalaire médian (5), un second espace intercalaire (6) tourné vers la face extérieure du bâtiment, et un troisième espace intercalaire (35) tourné vers l'intérieur du bâtiment, le premier espace intercalaire (5) étant rempli de gaz et les deux autres espaces intercalaires (6, 35) étant raccordés à au moins un circuit de liquide (9, 16) comportant au moins une pompe de circulation (8, 20) de telle sorte qu'au choix au moins l'un de ces espaces intercalaires (6, 35) est parcouru par un liquide (7) absorbant la lumière, ainsi qu'un dispositif de commande, **caractérisé en ce que** le dispositif de commande est agencé et réglé de telle sorte que le liquide (7) circule au moins dans le second espace intercalaire (6) dans le cas où la température extérieure est élevée et dans le cas de la présence d'un rayonnement solaire, et circule dans le troisième espace intercalaire (35) dans le cas d'une basse température extérieure.

2. Dispositif selon la revendication 1, dans lequel le premier espace intercalaire (5) est divisé par une multiplicité de barrettes horizontales (15), qui s'étendent dans la direction longitudinale et dont la largeur (B) est au moins quatre fois supérieure à la distance (A) de deux barrettes voisines.

3. Dispositif selon la revendication 1 ou 2, dans lequel le second espace intercalaire (6) est plus étroit que le troisième espace intercalaire (35).

4. Dispositif selon l'une des revendications 1 à 3, dans lequel le circuit (16), qui est raccordé au troisième espace intercalaire (35), passe par un élément de chauffage (21) du bâtiment.

5. Dispositif selon l'une des revendications 1 à 4, dans lequel le circuit (9), qui est raccordé au second espace intercalaire (6), est relié à un accumulateur d'eau chaude (11).

6. Dispositif selon l'une des revendications 1 à 5, dans lequel dans le circuit de liquide (9, 16) sont disposés plusieurs accumulateurs (17) comportant des liquides pigmentés différemment et qui peuvent être appliqués au choix, par l'intermédiaire de vannes, aux canalisations (9, 16) du circuit.

7. Dispositif selon l'une des revendications 1 à 5, dans lequel des dispositifs séparés de pigmentation sont branchés dans les circuits (9, 16) aboutissant aux deuxième et troisième espaces intercalaires (6, 35).

8. Dispositif selon l'une des revendications 1 à 7, dans lequel les deux plaques les plus extérieures (2, 34) et les plaques (3, 4), qui sont voisines des précédentes, sont reliées entre elles par des liaisons travaillant en traction (13, 16, 36).
